# EUROPEAN PATENT SPECIFICATION

(11) **EP 2 623 895 B1**
(45) Date of publication and mention of the grant of the patent: **17.04.2019**
(21) Application number: 11828689.7
(22) Date of filing: 01.09.2011
(51) Int. Cl.: F25B 43/02, B04C 3/06, B04C 3/00

(54) **OIL SEPARATION MEANS AND REFRIGERATION DEVICE EQUIPPED WITH THE SAME**
ÖLTRENNUNGSMITTEL UND DAMIT AUSGESTATTETE KÜHLVORRICHTUNG
MOYEN DE SÉPARATION D'HUILE ET CONGÉLATEUR ÉTANT ÉQUIPÉ DE CELUI-CI

(30) Priority: 30.09.2010 JP 2010222505
(43) Date of publication of application: 07.08.2013
(73) Proprietor: MITSUBISHI HEAVY INDUSTRIES THERMAL SYSTEMS, LTD., Tokyo 108-8215 (JP)
(72) Inventor: MATSUKURA, Noriyuki, Tokyo 108-8215 (JP); NAGAI, Tatsuru, Tokyo 108-8215 (JP)
(74) Representative: Intès, Didier Gérard André
(86) International application number: PCT/JP2011/069879
(87) International publication number: WO 2012/043128

(56) References cited:
- EP-A1- 0 583 770
- JP-A- 4 330 954
- JP-A- 2001 121 036
- JP-A- 2004 052 710
- KR-B1- 100 706 880
- US-A- 5 427 685

## Description

### {Technical Field}

The present invention relates to oil separation means and a refrigeration device equipped with the same, and more particularly, to cyclone-type oil separation means.

### {Background Art}

Compressors provided in turbo refrigerators employ the forced-circulation method in which lubricating oil is forcedly supplied by a lubricating oil pump from a lubricating oil tank to a gear and bearing that drive the compressor. Because of this, due to a pressure difference (oil-supply differential pressure) between the pressure at the outlet of the lubricating oil pump and the pressure inside the lubricating oil tank during operation of the turbo refrigerator, some of the lubricating oil inside the lubricating oil tank is sucked into the compressor, causing the level of lubricating oil in the lubricating oil tank to drop.

When the level of lubricating oil in the lubricating oil tank drops in this way, the oil supply differential pressure between the pressure at the outlet of the lubricating oil pump and the pressure inside the lubricating oil tank ends up being reduced, and there is a risk of damage to the compressor. Because the lubricating oil sucked in by the compressor is guided to a condenser together with refrigerant, the lubricating oil adheres to a heat exchanger portion in the condenser, causing a reduction in heat transfer.

A method for recovering the lubricating oil sucked into the compressor and mixed with the refrigerant involves using a shell-and-tube condenser and recovering the lubricating oil as drainage, and providing an oil mist separator tank at a discharge side of the compressor for performing separation and recovery of the lubricating oil that is mixed with the refrigerant.

Patent Literature 1 and Patent Literature 4 disclose inventions directed to cyclone-type oil mist separators, and Patent Literature 2 and Patent Literature 3 disclose inventions directed to demister-type oil mist separators.

Patent Literature 5 discloses making finer droplets of lubricating oil by using a double-flow nozzle, thereby improving the cooling effect of the refrigerant during the compression process in the compressor with a supply of lubricating oil. Documents EP 0583770, which discloses the preamble of claim 1, US 5247685, KR 100706880 and JP 2001121036 disclose examples of oil separators.

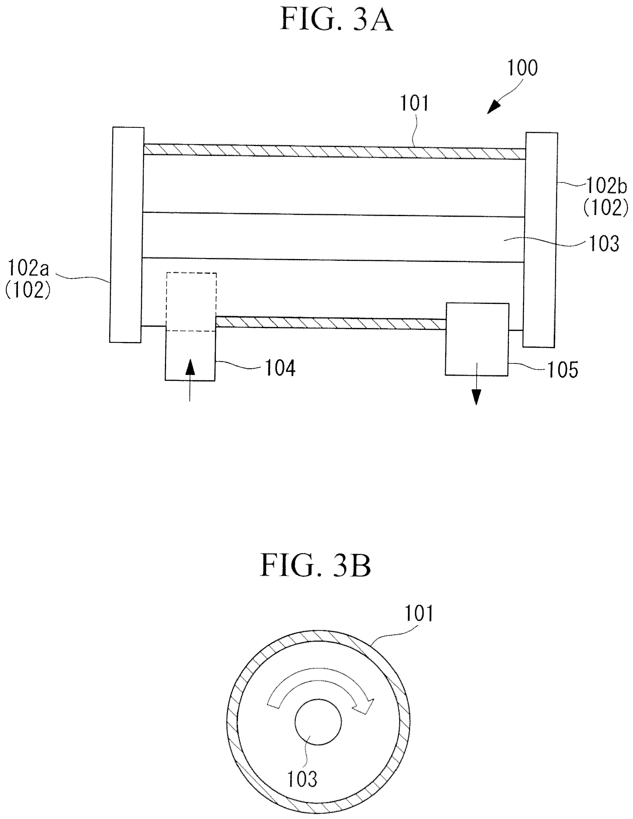

The cyclone-type oil mist separator tank will be described here using Figs. 3A to 4F.

Fig. 3A is a longitudinal sectional view showing, in outline, the configuration of a cyclone-type oil mist separator tank in the related art, and Fig. 3B is a lateral sectional view showing, in outline, the configuration thereof.

An oil mist separator tank 100 includes a cylindrical tank body 101 and end plates 102 at both ends of the tank body 101. A core 103 passes through along the center axis of the tank body 101. By rotating the oil mist separator tank 100 about this core 103, the lubricating oil that is mixed with the refrigerant is centrifugally separated. An oil collecting demister (not illustrated) is provided at an inner wall of the tank body 101, where the centrifugally separated lubricating oil is trapped so as to be prevented from being redispersed.

A refrigerant inflow pipe 104 through which the refrigerant, mixed with the lubricating oil, flows in is provided in the tank body 101 near one of the end plates 102a provided at both ends of the tank body 101, and a refrigerant outflow pipe 105 through which the refrigerant, from which the lubricating oil has been separated, flows out to the outside is provided in the tank body 101 near the other end plate 102b. An oil drain hole, which is not illustrated, is provided in the tank body 101 so that the trapped lubricating oil can be discharged.

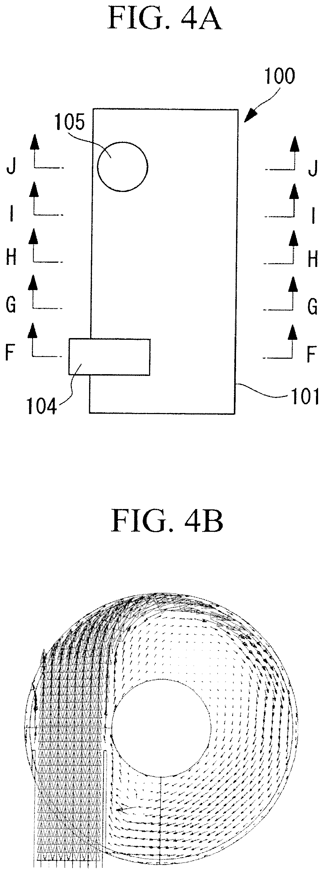

Tangential velocity vectors inside an oil mist separator tank 100 with such a configuration will be described using Figs. 4A to 4F.

Figs. 4A to 4F show tangential velocity vector diagrams inside the oil mist separator tank, where Fig. 4A is a schematic view of the oil mist separator tank shown in Fig. 3A, and Figs. 4B to 4F show tangential velocity vector diagrams in cross-sections at part F-F to part J-J in Fig. 4A.

The tangential velocity vector diagrams in each of the cross-sections in Figs. 4B to 4F show cases where the refrigerant that has flowed into the oil mist separator tank 100 from the refrigerant inflow pipe 104 is divided into five parts, from the upstream side to the downstream side, in this order, in the axial direction of the oil mist separator tank 100.

As shown in Fig. 4B, the tangential velocity vectors in the cross-section F-F in the oil mist separator tank 100, on the extension of the center axis of the refrigerant inflow pipe 104, are densely and substantially uniformly distributed so as to point in the extending direction of the center axis of the refrigerant inflow pipe 104, in the space (at the left side in Fig. 4B) formed between the core 103 (see Fig. 3B) and the tank body 101 through which the refrigerant inflow pipe 104 passes.

The oil-containing refrigerant that has flowed into the oil mist separator tank 100 from the refrigerant inflow pipe 104 flows in the direction of the extension line of the center axis of the refrigerant inflow pipe 104 and collides with the inner wall of the tank body 101 which exists in front thereof, causing the flow direction to turn so as to go along the inner wall of the tank body 101. Of the refrigerant whose flow direction has turned, the velocity of the refrigerant along the inner wall of the tank body 101 becomes faster than the velocity of the refrigerant that flows near the outer wall of the core 103, causing swirling. This is shown, in Fig. 4B, by the fact that the velocity vectors near the inner wall of the tank body 101 become denser than the velocity vectors near the outer wall of the core 103.

### {Citation List}

### {Patent Literature}

{PTL 1} Japanese Unexamined Patent Application, Publication No. 2008-101831
{PTL 2} Japanese Unexamined Patent Application, Publication No. 2008-151476
{PTL 3} Japanese Unexamined Patent Application, Publication No. 2008-196721
{PTL 4} Japanese Unexamined Patent Application, Publication No. 2009-257115
{PTL 5} Japanese Unexamined Patent Application, Publication No. 2010-101613

### {Summary of Invention}

### {Technical Problem}

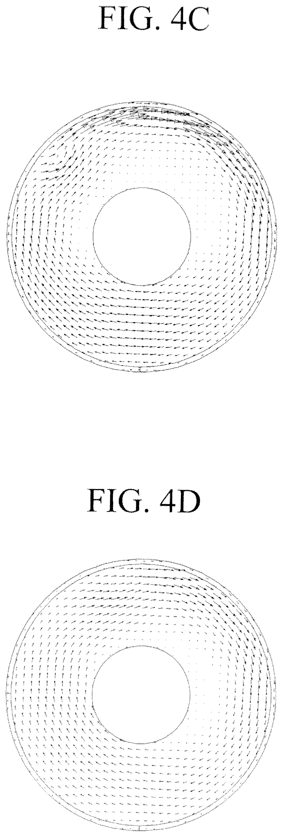

However, with the inventions described in Patent Literature 1 and Patent Literature 4, in the oil mist separator tank 100 in the related art, shown in Figs. 3A to 4F, part of the flow guided into the oil mist separator tank 100 from the refrigerant inflow pipe 104 moves farther towards the downstream side in the axial direction of the oil mist separator tank 100 than the cross-section F-F in the oil mist separator tank 100 on the extension of the center axis of the refrigerant inflow pipe 104, as shown in Fig. 4C, and therefore, the tangential velocity of the refrigerant decreases. Accordingly, the centrifugal force acting on the swirling oil decreases, causing a problem in that the separation performance is reduced.

The present invention has been conceived in light of such circumstances, and an object thereof is to provide centrifugal-separation oil separation means whose cyclone efficiency can be improved, as well as a refrigeration device equipped with the same.

### {Solution to Problem}

In order to realize the object described above, the present invention provides means as defined by claim 1.

Centrifugal-separation oil separation means according to an aspect of the present invention includes an outer cylinder that extends in an axial direction; an inner cylinder that passes through the interior of the outer cylinder in the axial direction; a pair of end plates provided at both ends of the outer cylinder; an inlet port that is connected to the outer cylinder near one of the end plates and that introduces an oil-containing fluid discharged from a compressor into a space formed between the outer cylinder and the inner cylinder so as to swirl about the axis; an outlet port that is connected to the outer cylinder near the other end plate and that expels the fluid, from which the oil has been centrifugally separated, out of the space; and an oil discharge port, provided in the outer cylinder, for discharging the separated oil out of the space, wherein a partition plate that extends over at least part of a cross-section perpendicular to the axial direction to partition the space in the axial direction is provided in the space.

The partition plate, which extends over at least part of the cross-section perpendicular to the axial direction of the outer cylinder so as to partition the space in the axial direction, is provided in the space between the outer cylinder and the inner cylinder of the oil separation means for separating oil that is mixed with the fluid by means of centrifugal separation. By doing so, movement of part of the fluid introduced into the space from the inlet port in the axial direction of the outer cylinder, without swirling, can be inhibited. Therefore, it is possible to promote a swirling flow of the fluid, and thus, the centrifugal force acting on the oil can be increased. Accordingly, the cyclone efficiency can be improved.

Because the cyclone efficiency can be improved by providing the partition plate in the space, the oil separation can be reduced in size compared with the related art.

In the above-described aspect, the partition plate may be provided near the inlet port, in the space, between the inlet port and the outlet port.

The partition plate is provided in the space, between the inlet port and the outlet port, near the inlet port. By doing so, movement of part of the fluid introduced into the space from the inlet port in the axial direction of the outer cylinder, without swirling, can be inhibited. Therefore, it is possible to promote a swirling flow of the fluid, and thus the centrifugal force acting on the oil can be increased. Accordingly, the cyclone efficiency can be improved.

In the above-described aspect, the partition plate is provided in an area from a connecting end of the inlet port connected to the outer cylinder to a position of 135° in the circumferential direction of the swirling fluid.

If the area occupied by the partition plate in the circumferential direction becomes large, the flow path area decreases, causing the pressure loss to increase.

Thus, the partition plate is provided in the area from the connecting end of the outer cylinder and the inlet port up to the position of 135° in the circumferential direction of the swirling fluid. By doing so, movement of part of the fluid in the axial direction of the outer cylinder, without swirling, can be inhibited without reducing the flow-path area of the fluid. Therefore, the cyclone efficiency can be improved while suppressing the pressure loss.

The partition plate connects an area from a connecting end in the circumferential direction of the swirling fluid to a position of 30° to 135° in the circumferential direction.

In the above-described aspect, the partition plate is provided in the form of a ring in the space, near the inlet port, between the one end plate and the inlet port.

The ring-shaped partition plate is provided near the inlet port in the space between the inlet port and the upstream end plate. By doing so, movement of part of the fluid guided into the space from the inlet port towards the upstream end plate, without swirling, can be restricted. Therefore, a swirling flow of the fluid is promoted, and the centrifugal force acting on the oil can be increased. Accordingly, the cyclone efficiency can be improved.

A refrigeration device according to an aspect of the present invention includes any one of the above-described centrifugal-separation oil separation means.

Because the oil separation means, whose cyclone efficiency can be improved, is used, it is possible to suppress the adherence of oil, which circulates inside the refrigeration device together with the refrigerant circulating in the refrigeration device, to a heat exchanger or the like. Therefore, it is possible to prevent a drop in the heat transfer coefficient.

Because the oil separation means, which can be reduced in size while improving the cyclone efficiency, is used, the amount of refrigerant filled in the refrigeration device can be reduced.

### {Advantageous Effects of Invention}

With the centrifugal-separation oil separation means according to the present invention, the partition plate that extends over at least part of the cross-section perpendicular to the axial direction of the outer cylinder is provided in the space between the outer cylinder and the inner cylinder of the oil separation means for separating oil mixed with fluid by means of centrifugal separation. By doing so, the movement of part of the fluid introduced into the space from the inlet port in the axial direction of the outer cylinder, without swirling, can be inhibited. Therefore, it is possible to promote a swirling flow of the fluid, and thus it is possible to increase the centrifugal force acting on the oil. Accordingly, it is possible to improve the cyclone efficiency.

Because the cyclone efficiency can be improved by providing the partition plate in the space, the oil separation means can be reduced in size compared with oil separation means in the related art.

### {Brief Description of Drawings}

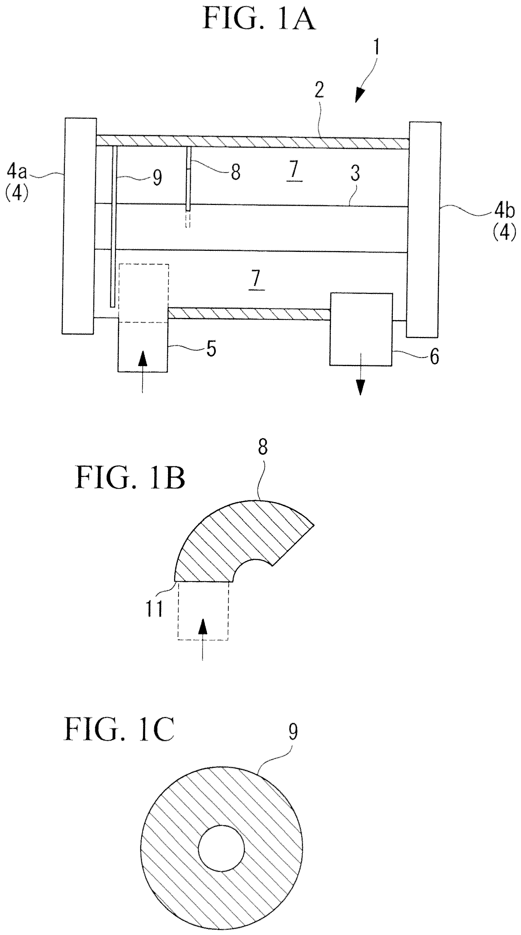

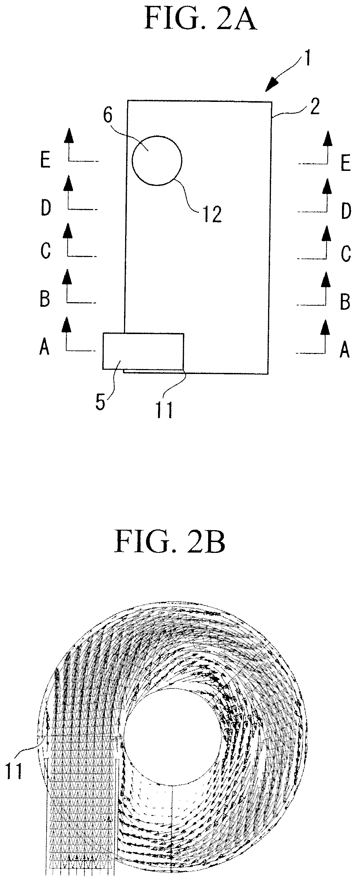

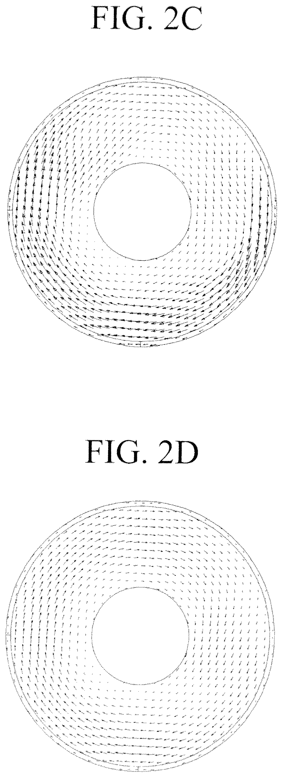

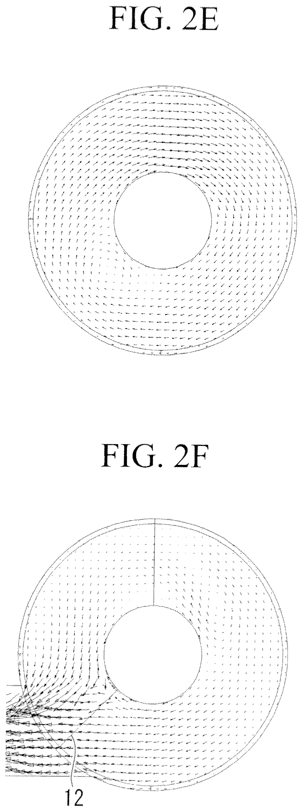

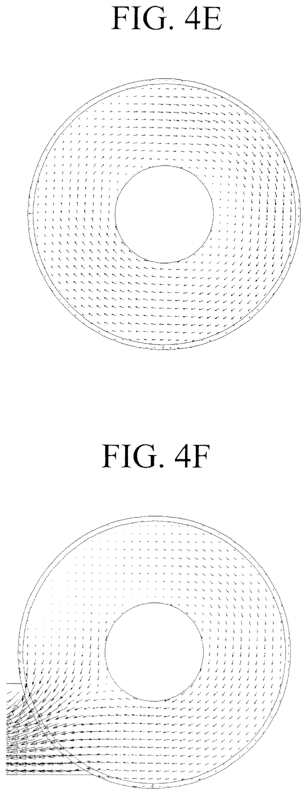

{Fig. 1A} Fig. 1A is a longitudinal sectional view showing, in outline, the configuration of an oil mist separator tank provided in a turbo refrigeration device according to an embodiment of the present invention.
{Fig. 1B} Fig. 1B shows a partition plate of an oil mist separator tank provided in a turbo refrigeration device according to an embodiment of the present invention.
{Fig. 1C} Fig. 1C shows a partition plate of an oil mist separator tank provided in a turbo refrigeration device according to an embodiment of the present invention.
{Fig. 2A} Fig. 2A is a schematic diagram of the oil mist separator tank shown in Fig. 1A
{Fig. 2B} Fig. 2B is a tangential velocity vector diagram of the inside of the oil mist separator tank shown in Figs. 1A to 1C, showing a cross-section along part A-A in Fig. 2A.
{Fig. 2C} Fig. 2C is a tangential velocity vector diagram of the inside of the oil mist separator tank shown in Figs. 1A to 1C, showing a cross-section along part B-B in Fig. 2A.
{Fig. 2D} Fig. 2D is a tangential velocity vector diagram of the inside of the oil mist separator tank shown in Figs. 1A to 1C, showing a cross-section along part C-C in Fig. 2A.
{Fig. 2E} Fig. 2E is a tangential velocity vector diagram of the inside of the oil mist separator tank shown in Figs. 1A to 1C, showing a cross-section along part D-D in Fig. 2A.
{Fig. 2F} Fig. 2F is a tangential velocity vector diagram of the inside of the oil mist separator tank shown in Figs. 1A to 1C, showing a cross-section along part E-E in Fig. 2A.
{Fig. 3A} Fig. 3A is a longitudinal sectional view showing, in outline, the configuration of an oil mist separator tank in the related art.
{Fig. 3B} Fig. 3B is a lateral sectional view showing, in outline, the configuration of the oil mist separator tank in the related art.
{Fig. 4A} Fig. 4A is a schematic diagram of the oil mist separator tank shown in Fig. 3A.
{Fig. 4B} Fig. 4B is a tangential velocity vector diagram of the inside of the oil mist separator tank shown in Figs. 3A and 3B, showing a cross-section along part F-F in Fig. 4A.
{Fig. 4C} Fig. 4C is a tangential velocity vector diagram of the inside of the oil mist separator tank shown in Figs. 3A and 3B, showing a cross-section along part G-G in Fig. 4A.
{Fig. 4D} Fig. 4D is a tangential velocity vector diagram of the inside of the oil mist separator tank shown in Figs. 3A and 3B, showing a cross-section along part H-H in Fig. 4A.
{Fig. 4E} Fig. 4E is a tangential velocity vector diagram of the inside of the oil mist separator tank shown in Figs. 3A and 3B, showing a cross-section along part I-I in Fig. 4A.
{Fig. 4F} Fig. 4F is a tangential velocity vector diagram of the inside of the oil mist separator tank shown in Figs. 3A and 3B, showing a cross-section along part J-J in Fig. 4A.

### {Description of Embodiments}

An embodiment of the present invention will be described below with reference to Figs. 1A to 2F.

Figs. 1A and 1B show an oil mist separator tank provided in a turbo refrigeration device according to an embodiment of the present invention, where Fig. 1A is a longitudinal sectional view showing, in outline, the configuration thereof, and Figs. 1B and 1C show partition plates.

An oil mist separator tank (oil separation means) 1 is assumed to be of the horizontal type. The oil mist separator tank 1 includes an outer cylinder 2 the inner diameter of which extends by, for example, 600 mm in the axial direction; an inner cylinder 3 that passes through the interior of the outer cylinder 2 in the axial direction; a pair of end plates 4 provided at both ends of the outer cylinder 2; an inlet port 5 connected with the outer cylinder 2 near one end plate 4a (the left side in Fig. 1A) for introducing oil-containing refrigerant (fluid) that is discharged from a compressor (not shown in the drawings) into a space 7 formed between the outer cylinder 2 and the inner cylinder 3 so as to swirl around the axis thereof; an outlet port 6 connected to the outer cylinder 2 near the other end plate 4b (the right side in Fig. 1A) for expelling the refrigerant, from which the oil has been centrifugally separated, out of the space 7; and an oil discharge port (not shown in the drawings) for discharging the separated oil from the space 7.

The inlet port 5 is connected so as to be perpendicular to the axial direction of the outer cylinder 2. Therefore, the refrigerant that is guided into the oil mist separator tank 1 through the outlet port 6 exhibits a swirling flow about the axis of the outer cylinder 2, along the space 7, which is formed in an annular shape. A cyclone effect (centrifugal separation effect) is generated in the refrigerant by means of this swirling flow.

In addition, the inlet port 5 is provided near the end plate 4a located on the upstream side in the axial direction of the outer cylinder 2. By doing so, the distance over which the swirling flow generated in the refrigerant moves inside the oil mist separator tank 1 is lengthened. This distance is assumed to be a distance sufficiently long to exhibit the cyclone effect that separates the oil contained in the refrigerant.

The outlet port 6, which is at the downstream side in the axial direction of the outer cylinder 2, is provided so as to be perpendicular to the axial direction of the outer cylinder 2. Connecting the outlet port 6 to the outer cylinder 2 in this way makes it easier for the flow of refrigerant that has swirled inside the oil mist separator tank 1 to be expelled outside the oil mist separator tank 1.

The space 7 is formed between the inner wall of the outer cylinder 2 and the outer wall of the inner cylinder 3. The refrigerant moves in a swirling fashion through this space 7 from the upstream side to the downstream side in the axial direction of the outer cylinder 2. Due to this swirling flow, a centrifugal force acts on the oil in the refrigerant, causing the oil to be separated from the refrigerant.

An oil-collecting demister, which is not illustrated, is provided at the inner wall of the outer cylinder 2. The oil-collecting demister, which is made of metal, prevents the oil that has been separated from the refrigerant from being redispersed. The oil collected in the oil-collecting demister moves in the direction of the gravitational force (downward in Fig. 1A) and is discharged outside the oil mist separator tank 1 from the oil discharge port provided in the outer cylinder 2.

As shown in Fig. 1A, an upstream-portion partition plate 8 (partition plate) that extends over at least part of the cross-section perpendicular to the axial direction of the outer cylinder 2 so as to partition the space 7 in the axial direction is provided in the space 7 between the inlet port 5 and the outlet port 6, near the inlet port 5.

As shown in Fig. 1B, the upstream-portion partition plate 8 takes a sector-shaped form that connects the area between a connection end 11 of the inlet port 5 connected to the outer cylinder 2 and a position of 135° in the circumferential direction of the swirling refrigerant.

The upstream-portion partition plate 8 connects the area from the connection end 11 to at least a position of 30° or greater up to 135° in the circumferential direction of the swirling refrigerant.

An annular partition plate (partition plate) 9 that has an annular form that extends over the entire cross-section perpendicular to the axial direction of the outer cylinder 2 so as to partition the space 7 in the axial direction is provided in the space 7 near the inlet port 5, between the upstream (one) end plate 4a and the inlet port 5.

A downstream-portion partition plate (not shown in the drawings) that extends over at least part of the cross-section perpendicular to the axial direction of the outer cylinder 2 so as to partition the space 7 in the axial direction is provided in the space 7 between the inlet port 5 and the outlet port 6, near the outlet port 6.

The downstream-portion partition plate takes a sector-shaped form that connects the area from position 12 (see Fig. 2), where the center axis of the outlet port 6 connected to the outer cylinder 2 intersects the outer cylinder 2, up to the position of 135° in the anticlockwise circumferential direction.

Next, the flow in which the oil is separated from the refrigerant and the flow of refrigerant inside the oil mist separator tank 1 will be described using Figs. 1A to 2F.

Because a portion of the cross-section perpendicular to the axial direction of the space 7 is partitioned by the upstream-portion partition plate 8, and the entirety of the cross-section perpendicular to the axial direction of the space 7, from the inlet port 5 to the end plate 4a at the upstream end, is partitioned by the annular partition plate 9, for the oil-containing refrigerant that has flowed into the space 7 from the compressor via the inlet port 5, as shown in Fig. 2B and Fig. 2C, the movement of the refrigerant that tends to move downstream in the axial direction of the outer cylinder 2 and the movement of the refrigerant that tends to move from the inlet port 5 towards the end plate 4a are restricted.

By providing the upstream-portion partition plate 8 and the annular partition plate 9 in this way, the amount of the portion of the refrigerant in the cross-section A-A shown in Fig. 2A that moves towards the downstream side and the upstream side in the axial direction of the outer cylinder 2 can be restricted to about 40% compared with the related art. Therefore, a swirling flow of refrigerant develops in the cross-section A-A, increasing the centrifugal force exerted on the oil contained in the refrigerant, and therefore, it is possible to improve the cyclone efficiency for separating the oil from the refrigerant (centrifugal separation efficiency).

By providing the downstream-portion partition plate, as shown in Fig. 2F, the refrigerant flowing in the opposite direction to the swirling direction of the refrigerant in the cross-section E-E shown in Fig. 2A is inhibited from moving towards the outlet port 6. Thus, it is possible to promote a swirling flow of the refrigerant and to improve the cyclone efficiency.

With the centrifugal-separation oil mist separator tank 1 according to the embodiment described above and the turbo refrigeration device equipped with the same, the following advantages are afforded.

The upstream-portion partition plate (partition plate) 8, the annular partition plate (partition plate) 9, and the downstream-portion partition plate, which extend over at least part of the cross-section perpendicular to the axial direction of the outer cylinder 2 so as to partition the space 7 in the axial direction, are provided in the space 7 between the outer cylinder 2 and the inner cylinder 3 of the oil mist separator tank (oil separation means) 1 for separating oil that is mixed with the refrigerant (fluid) by means of centrifugal separation. By doing so, movement of part of the refrigerant introduced into the space 7 from the inlet port 5 in the axial direction of the outer cylinder 2, without swirling, can be inhibited. Therefore, it is possible to promote a swirling flow of the refrigerant, and thus, the centrifugal force acting on the oil can be increased. Accordingly, the cyclone efficiency can be improved.

Because the cyclone efficiency can be improved by providing the upstream-portion partition plate 8, the annular partition plate 9, and the downstream-portion partition plate in the space 7, the oil mist separator tank 1 can be reduced in size.

The upstream-portion partition plate 8 is provided in the space 7, between the inlet port 5 and the outlet port 6, near the inlet port 5. By doing so, movement of part of the refrigerant introduced into the space 7 from the inlet port 5 to the downstream side in the axial direction of the outer cylinder 2, without swirling, can be inhibited. Therefore, it is possible to promote a swirling flow of the refrigerant, and thus the centrifugal force acting on the oil can be increased. Accordingly, the cyclone efficiency can be improved.

The upstream-portion partition plate 8 is provided in the area from the connecting end 11 of the outer cylinder 2 and the inlet port 5 up to the position of 135° in the circumferential direction of the swirling refrigerant. By doing so, movement of part of the refrigerant downstream in the axial direction of the outer cylinder 2, without swirling, can be inhibited without reducing the flow-path area of the refrigerant in the cross-section A-A (see Fig. 2A). Therefore, the cyclone efficiency can be improved while suppressing the pressure loss.

The ring-shaped annular partition plate 9 is provided near the inlet port 5 in the space 7 between the inlet port 5 and the upstream (one) end plate 4a. By doing so, movement of part of the refrigerant guided into the space 7 from the inlet port 5 towards the upstream end plate 4a, without swirling, can be restricted. Therefore, a swirling flow of the refrigerant is promoted, and the centrifugal force acting on the oil can be increased. Accordingly, the cyclone efficiency can be improved.

The oil mist separator tank 1, whose cyclone efficiency can be improved, is used. By doing so, it is possible to suppress the adherence of oil, which circulates inside the refrigeration device together with the refrigerant circulating in the refrigeration device (not illustrated), to the heat exchanger (not illustrated) or the like. Therefore, it is possible to prevent a drop in the heat transfer coefficient.

Because the oil mist separator tank 1, which can be reduced in size while improving the cyclone efficiency, is used, the amount of refrigerant filled in the refrigeration device can be reduced.

In this embodiment, a description has been given assuming that the oil mist separator tank 1 is of the horizontal type; however, the present invention is not limited to this and is also applicable to a vertical type.

### {Reference Signs List}

- 1: oil mist separator tank (oil separation means)
- 2: outer cylinder
- 3: inner cylinder
- 4, 4a, 4b: end plate
- 5: inlet port
- 6: outlet port
- 7: space
- 8: upstream-portion partition plate (partition plate)
- 9: annular partition plate (partition plate)

## Claims

1. Centrifugal-separation oil separation means which comprises:
an outer cylinder (2) that extends in an axial direction;
an inner cylinder (3) that passes through the interior of the outer cylinder (2) in the axial direction;
a pair of end plates (4a, 4b) provided at both ends of the outer cylinder (2);
an inlet port (5) that is connected to the outer cylinder (2) near one of the end plates (4a) and that introduces an oil-containing fluid discharged from a compressor into a space (7) formed between the outer cylinder (2) and the inner cylinder (3) so as to swirl about the axis;
an outlet port (6) that is connected to the outer cylinder (2) near the other end plate (4b) and that expels the fluid, from which the oil has been centrifugally separated, out of the space (7); and
an oil discharge port, provided in the outer cylinder, for discharging the separated oil out of the space,
wherein a partition plate (8, 9) that extends over at least part of a cross-section perpendicular to the axial direction to partition the space (7) in the axial direction is provided in the space (7), **characterized in that**
the partition plate (8, 9) comprises
a first partition plate (8) which is provided in an area from a connecting end of the inlet port (5) connected to the outer cylinder (2) to a position of more than 30° and less than 135° in the circumferential direction of the swirling fluid, and
a second partition plate (9) which is provided in the form of a ring in the space, near the inlet port (5), between the one end plate (4a) and the inlet port (5).

2. Centrifugal-separation oil separation means according to Claim 1, wherein the first partition plate (8) is provided near the inlet port (5), in the space (7), between the inlet port (5) and the outlet port (6).

3. Centrifugal-separation oil separation means according to Claim 1 or 2 further comprising a third partition plate that extends over at least part of a cross-section perpendicular to an axial direction of the outer cylinder (2) so as to partition the space (7) in the axial direction, the third partition plate being provided in the space (7) between the inlet port (5) and the outlet port (6), near the outlet port (6).

4. A refrigeration device comprising centrifugal-separation oil separation means according to one of Claims 1 to 3.

## Patentansprüche

1. Fliehkraftabscheidungs-Ölabscheidungsvorrichtung, die Folgendes umfasst:
einen äußeren Zylinder (2), der sich in einer axialen Richtung erstreckt;
einen inneren Zylinder (3), der in der axialen Richtung durch das Innere des äußeren Zylinders (2) verläuft;
ein Paar Endplatten (4a, 4b), die an beiden Enden des äußeren Zylinders (2) vorgesehen sind;
eine Einlassöffnung (5), die mit dem äußeren Zylinder (2) in der Nähe einer der Endplatten (4a) verbunden ist und die ein ölhaltiges Fluid, das von einem Kompressor abgegeben wird, in einen Raum (7) einführt, der zwischen dem äußeren Zylinder (2) und dem inneren Zylinder (3) gebildet ist, um sich um die Achse zu drehen;
eine Auslassöffnung (6), die in der Nähe der anderen Endplatte (4b) mit dem äußeren Zylinder (2) verbunden ist und die das Fluid, aus dem das Öl durch Fliehkraft abgeschieden worden ist, aus dem Raum (7) ausstößt; und
eine Ölaustragöffnung, vorgesehen im äußeren Zylinder, zum Austragen des abgeschiedenen Öls aus dem Raum,
wobei eine Trennplatte (8, 9), die sich über mindestens einen Teil eines Querschnitts senkrecht zur axialen Richtung erstreckt, um den Raum (7) in axialer Richtung zu unterteilen, im Raum (7) vorgesehen ist, **dadurch gekennzeichnet, dass**
die Trennplatte (8, 9) aufweist:
eine erste Trennplatte (8), die in einem Bereich von einem Verbindungsende der Einlassöffnung (5), die mit dem äußeren Zylinder (2) verbunden ist, bis zu einer Position von mehr als 30° und weniger als 135° in der Umfangsrichtung des Wirbelfluids vorgesehen ist, und
eine zweite Trennplatte (9), die in Form eines Rings im Raum, in der Nähe der Einlassöffnung (5), zwischen der einen Endplatte (4a) und der Einlassöffnung (5) vorgesehen ist.

2. Fliehkraftabscheidungs-Ölabscheidungsvorrichtung nach Anspruch 1, wobei
die erste Trennplatte (8) in der Nähe der Einlassöffnung (5), im Raum (7) zwischen der Einlassöffnung (5) und der Auslassöffnung (6) vorgesehen ist.

3. Fliehkraftabscheidungs-Ölabscheidungsvorrichtung nach Anspruch 1 oder 2, ferner umfassend:
eine dritte Trennplatte, die sich über mindestens einen Teil eines Querschnitts senkrecht zu einer axialen Richtung des äußeren Zylinders (2) erstreckt, um den Raum (7) in axialer Richtung zu unterteilen, wobei die dritte Trennplatte im Raum (7) in der Nähe der Auslassöffnung (6), zwischen der Einlassöffnung (5) und der Auslassöffnung (6) vorgesehen ist.

4. Kühlvorrichtung, umfassend eine Fliehkraftabscheidungs-Ölabscheidungsvorrichtung nach einem der Ansprüche 1 bis 3.

## Revendications

1. Moyen de séparation d'huile par séparation centrifuge qui comprend :
un cylindre externe (2) qui s'étend dans une direction axiale ;
un cylindre interne (3) qui passe par l'intérieur du cylindre externe (2) dans la direction axiale ;
une paire de plaques d'extrémité (4a, 4b) prévues aux deux extrémités du cylindre externe (2) ;
un orifice d'entrée (5) qui est raccordé au cylindre externe (2) à proximité de l'une des plaques d'extrémité (4a) et qui introduit un fluide contenant de l'huile déchargé d'un compresseur dans un espace (7) formé entre le cylindre externe (2) et le cylindre interne (3) afin de tourbillonner autour de l'axe ;
un orifice de sortie (6) qui est raccordé au cylindre externe (2) à proximité de l'autre plaque d'extrémité (4b) et qui expulse le fluide, duquel l'huile a été séparée, par centrifugation, hors de l'espace (7) ; et
un orifice de décharge d'huile, prévu dans le cylindre externe, pour décharger l'huile séparée hors de l'espace,
dans lequel une plaque de séparation (8, 9) qui s'étend sur au moins une partie d'une section transversale perpendiculaire à la direction axiale pour diviser l'espace (7) dans la direction axiale, est prévue dans l'espace (7), **caractérisé en ce que** :
la plaque de séparation (8, 9) comprend :
une première plaque de séparation (8) qui est prévue dans une zone à partir d'une extrémité de raccordement de l'orifice d'entrée (5) raccordée au cylindre externe (2) jusqu'à une position supérieure à 30° et inférieure à 135° dans la direction circonférentielle du fluide tourbillonnant, et
une deuxième plaque de séparation (9) qui est prévue sous la forme d'un anneau dans l'espace, à proximité de l'orifice d'entrée (5), entre la une plaque d'extrémité (4a) et l'orifice d'entrée (5).

2. Moyen de séparation d'huile par séparation centrifuge selon la revendication 1, dans lequel la première plaque de séparation (8) est prévue à proximité de l'orifice d'entrée (5), dans l'espace (7), entre l'orifice d'entrée (5) et l'orifice de sortie (6).

3. Moyen de séparation d'huile par séparation centrifuge selon la revendication 1 ou 2, comprenant en outre une troisième plaque de séparation qui s'étend sur au moins une partie d'une section transversale perpendiculaire à une direction axiale du cylindre externe (2) afin de séparer l'espace (7) dans la direction axiale, la troisième plaque de séparation étant prévue dans l'espace (7) entre l'orifice d'entrée (5) et l'orifice de sortie (6), à proximité de l'orifice de sortie (6).

4. Dispositif de réfrigération comprenant un moyen de séparation d'huile par séparation centrifuge selon l'une des revendications 1 à 3.
